# EUROPEAN PATENT APPLICATION

(11) **EP 4 582 606 A1**
(43) Date of publication of application: **09.07.2025**
(21) Application number: 25150950.1
(22) Date of filing: 07.10.2016
(51) Int. Cl.: D04C 1/12, D07B 1/02, D07B 1/14, D06M 15/227, C08J 5/04, D07B 1/16

(54) **COMPOSITE LENGTHY BODY**

(30) Priority: 09.10.2015 EP 15189133
(62) Divisional of application: 16778382.8
(71) Applicant: Avient Protective Materials B.V., 6167 RD Geleen (NL)
(72) Inventor: MARISSEN, Roelof, Geleen (NL); SCHNEIDERS, Hans, Geleen (NL); BOSMAN, Rigobert Léon Marie, Geleen (NL); WIENKE, Dietrich, Geleen (NL); NIELABA, Leonard Josef Arnold, Geleen (NL)
(74) Representative: Avient Protective Materials

(57) **Abstract**

The invention relates to a method for manufacturing a lengthy body comprising high performance polyethylene fibres and a polymeric resin comprising the steps of applying an aqueous suspension of a polymeric resin to HPPE fibres, assembling the HPPE fibres, partially drying the aqueous suspension, optionally applying a temperature, tension and/or a pressure treatment to the lengthy body wherein the polymeric resin is a homopolymer or copolymer of ethylene and/or propylene. The invention further relates to lengthy bodies obtainable by said method and articles comprising the lengthy body such nets, round slings, splices, belts or synthetic chain links.

## Description

The present invention concerns a method for producing an lengthy body comprising high performance polyethylene fibres and a polymeric resin and such composite lengthy body. Lengthy bodies such as ropes and ribbons are amongst others especially adapted to be used as load-bearing element in many applications such as mooring lines, lifting ropes, sutures, pressure vessels and fishing lines.

Typical applications of ropes and ribbons involve repeated bending, amongst which bend-over-sheave applications. During such application the rope is frequently pulled over drums, bitts, pulleys, sheaves, etc., a.o. resulting in rubbing and bending of the rope. When exposed to such frequent bending or flexing, a rope may fail due to rope and fiber damage resulting from external and internal abrasion, frictional heat, etc.; such fatigue failure is often referred to as bend fatigue or flex fatigue.

HPPE fibre ropes with improved bending fatigue have been described in for example WO2007/062803 and WO2011/015485. WO2007/062803 describes a rope constructed from high performance polyethylene fibers and polytetrafluoroethylene fibers. These ropes can contain 3-18 mass% of fluid polyorganosiloxanes. WO2011/015485 describes ropes comprising HPPE fibres coated with a cross-linked silicone rubber. Thus, according to the prior art it has been suggested to use silicone compositions alone or in combination with low friction fibres such as PTFE, to reduce the frictional behaviour of the HPPE fibres during bending applications. Especially WO2011/015485 describes a technology that has since been established in the field of high end bending applications.

Ropes as described in WO2007/062803 and WO2011/015485 have several drawbacks amongst which the presence of substantial amounts of non-load bearing components in the rope in the form of PTFE filaments or silicone compositions. The manufacturing process is complex in view of material combinations or chemical reactions being involved and often results in discoloured products. Other drawbacks are that the increased lubricity of the rope composition leads to technical handling issues during amongst others traction winding processes, splicing and knotting of the ropes. Last but not least, the described ropes are prone to leaching of materials, whilst rope foreign components such as splinters, dirt, dust and water may intrude the rope structure and enhance deterioration. This is often compensated by the addition of a protective layer or additional coating which adversely affects the handling but also bending performance of the product.

It is the aim of the present invention to provide a manufacturing process and the thereby obtainable composite material that has good repeated bending performance and at least partly overcomes the above mentioned problems.

The present invention solves this need by the manufacturing the lengthy body comprising high performance polyethylene fibres and a polymeric resin in a process comprising the steps of providing high performance polyethylene (HPPE) fibres, applying an aqueous suspension of the polymeric resin to the HPPE fibres before, during or after assembling the HPPE fibres to form a lengthy body and at least partially drying the aqueous suspension of the polymeric resin applied to the HPPE fibres to obtain a lengthy body comprising the HPPE fibres and the polymeric resin throughout the lengthy body, optionally applying a temperature in the range from the melting temperature of the resin to 153°C to the lengthy body before, during and/or after at least partially drying the suspension to at least partially melt the polymeric resin and optionally applying a pressure and/or a tension to the lengthy body before, during and/or after at least partially melting the polymeric resin to at least partially compact and/or elongate the lengthy body, wherein the polymeric resin is a homopolymer or copolymer of ethylene and/or propylene and wherein said polymeric resin has a density as measured according to ISO1183 in the range from 860 to 930 kg/m³, a peak melting temperature in the range from 40 to 140°C and a heat of fusion of at least 5 J/g.

It has unexpectedly been found that the lengthy body manufactured according to the method of the present invention show good repeated bending over sheave performance, matching and even exceeding the number of cycles of cross-linked silicone rubber coated fibres while at least partly overcoming above mentioned problems. The inventors found that the good bending properties came combined with other improved mechanical properties. Said improvement was seen for example with the tenacity and the knot slippage force of a lengthy body according to the invention. It was also observed that although the weight of the lengthy body was increased by the presence of the polymeric resin, the force at break and even the tenacity of the lengthy body has increased. Furthermore the lengthy bodies according to the invention may show a unitary character of the lengthy body itself or the HPPE yarns which reduces the risk of rope damages through rope foreign materials.

By fibre is herein understood an elongated body, the length dimension of which is much greater than the transverse dimensions of width and thickness. Accordingly, the term fiber includes filament, strip, band, tape, and the like having regular or irregular cross-sections. The fiber may have continuous lengths, known in the art as filament or continuous filament, or discontinuous lengths, known in the art as staple fibers. A yarn for the purpose of the invention is an elongated body containing many individual fibers. By individual fiber is herein understood the fiber as such. Preferably the HPPE fibres of the present invention are HPPE tapes, HPPE filaments or HPPE staple fibres.

In the context of the present invention HPPE fibres are understood to be polyethylene fibres with improved mechanical properties such as tensile strength, abrasion resistance, cut resistance or the like. In a preferred embodiment high performance polyethylene fibres are polyethylene fibres with a tensile strength of at least 1.0 N/tex, more preferably at least 1.5 N/tex, more preferably at least 1.8 N/tex, even more preferably at least 2.5 N/tex and most preferably at least 3.5 N/tex. Preferred polyethylene is high molecular weight (HMWPE) or ultrahigh molecular weight polyethylene (UHMWPE). Best results were obtained when the high performance polyethylene fibers comprise ultra-high molecular weight polyethylene (UHMWPE) and have a tenacity of at least 2.0 N/tex, more preferably at least 3.0 N/tex.

Preferably the lengthy body of the present invention comprises HPPE fibres comprising high molecular weight polyethylene (HMWPE) or ultra-high molecular weight polyethylene (UHMWPE) or a combination thereof, preferably the HPPE fibres substantially consist of HMWPE and/or UHMWPE. The inventors observed that for HMWPE and UHMWPE largest effect on the tenacity or knot slippage force could be achieved.

In the context of the present invention the expression 'substantially consisting of' has the meaning of 'may comprise a minor amount of further species' wherein minor is up to 5 wt%, preferably of up to 2wt% of said further species or in other words 'comprising more than 95 wt% of' preferably 'comprising more than 98 wt% of' HMWPE and/or UHMWPE.

In the context of the present invention the polyethylene (PE) may be linear or branched, whereby linear polyethylene is preferred. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains may suitably be measured by FTIR. The linear polyethylene may further contain up to 5 mol% of one or more other alkenes that are copolymerisable therewith, such as propene, 1-butene, 1-pentene, 4-methylpentene, 1-hexene and/or 1-octene.

The PE is preferably of high molecular weight with an intrinsic viscosity (IV) of at least 2 dl/g; more preferably of at least 4 dl/g, most preferably of at least 8 dl/g. Such polyethylene with IV exceeding 4 dl/g are also referred to as ultra-high molecular weight polyethylene (UHMWPE). Intrinsic viscosity is a measure for molecular weight that can more easily be determined than actual molar mass parameters like number and weigh average molecular weights (Mn and Mw).

The HPPE fibres used in the method according to the invention may be obtained by various processes, for example by a melt spinning process, a gel spinning process or a solid state powder compaction process.

One preferred method for the production of the fibres is a solid state powder process comprising the feeding the polyethylene as a powder between a combination of endless belts, compression-molding the polymeric powder at a temperature below the melting point thereof and rolling the resultant compression-molded polymer followed by solid state drawing. Such a method is for instance described in US 5,091,133, which is incorporated herein by reference. If desired, prior to feeding and compression-molding the polymer powder, the polymer powder may be mixed with a suitable liquid compound having a boiling point higher than the melting point of said polymer. Compression molding may also be carried out by temporarily retaining the polymer powder between the endless belts while conveying them. This may for instance be done by providing pressing platens and/or rollers in connection with the endless belts.

Another preferred method for the production of the fibres used in the invention comprises feeding the polyethylene to an extruder, extruding a molded article at a temperature above the melting point thereof and drawing the extruded fibres below its melting temperature. If desired, prior to feeding the polymer to the extruder, the polymer may be mixed with a suitable liquid compound, for instance to form a gel, such as is preferably the case when using ultra high molecular weight polyethylene.

In yet another method the fibres used in the invention are prepared by a gel spinning process. A suitable gel spinning process is described in for example GB-A-2042414, GB-A-2051667, EP 0205960 A and WO 01/73173 A1. In short, the gel spinning process comprises preparing a solution of a polyethylene of high intrinsic viscosity, extruding the solution into a solution-fibre at a temperature above the dissolving temperature, cooling down the solution-fibre below the gelling temperature, thereby at least partly gelling the polyethylene of the fibre, and drawing the fibre before, during and/or after at least partial removal of the solvent.

In the described methods to prepare HPPE fibres drawing, preferably uniaxial drawing, of the produced fibres may be carried out by means known in the art. Such means comprise extrusion stretching and tensile stretching on suitable drawing units. To attain increased mechanical tensile strength and stiffness, drawing may be carried out in multiple steps. In case of the preferred UHMWPE fibres, drawing is typically carried out uniaxially in a number of drawing steps. The first drawing step may for instance comprise drawing to a stretch factor (also called draw ratio) of at least 1.5, preferably at least 3.0. Multiple drawing may typically result in a stretch factor of up to 9 for drawing temperatures up to 120°C, a stretch factor of up to 25 for drawing temperatures up to 140°C, and a stretch factor of 50 or above for drawing temperatures up to and above 150°C. By multiple drawing at increasing temperatures, stretch factors of about 50 and more may be reached. This results in HPPE fibres, whereby for ultrahigh molecular weight polyethylene, tensile strengths of 1.5 N/tex to 3 N/tex and more may be obtained.

In one process step of the present invention an aqueous suspension is applied to the HPPE fibres. Such application of suspension takes place before, during or after the fibres are assembled to form the lengthy body. By aqueous suspension is understood that particles of the polymeric resin are suspended in water acting as non-solvent. The concentration of the polymeric resin may widely vary and is mainly limited by the capability to formulate a stable suspension of the resin in water. A typical range of concentration is between 2 and 80 wt% of polymeric resin in water, whereby the weight percentage is the weight of polymeric resin in the total weight of aqueous suspension. Preferred concentration are between 4 and 60 wt%, more preferably between 5 and 50 wt%, most preferably between 6 and 40 wt%. Further preferred concentrations of the polymeric resin in the dispersion is at least 15 wt%, preferably at least 18 wt% and even more preferably at least 20 wt%. In another preferred embodiment the concentration of the polymeric resin in the aqueous dispersion is between 10 and 50 wt%, preferably between 15 and 40 wt%, most preferably between 18 wt% and 30 wt%, Such preferred higher concentrations of polymeric resin may have the advantage of a providing lengthy body with higher concentration while reducing the time and energy required for the removal of the water from the lengthy body. The suspension may further comprise additives such as ionic or non-ionic surfactants, tackyfying resins, stabilizers, anti-oxidants, colorants or other additives modifying the properties of the suspension, the resin and or the prepared lengthy body.

The polymeric resin present in the applied aqueous suspension and ultimately present in the obtained lengthy body of the present invention is a homopolymer or copolymer of ethylene and/or propylene, also referred to as polyethylene, polypropylene or copolymers thereof, in the context of the present invention also referred to as polyolefin resin. It may comprise the various forms of polyethylene, ethylene-propylene co-polymers, other ethylene copolymers with co-monomers such as 1-butene, isobutylene, as well as with hetero atom containing monomers such as acrylic acid, methacrylic acid, vinyl acetate, maleic anhydride, ethyl acrylate, methyl acrylate; generally α-olefin and cyclic olefin homopolymers and copolymers, or blends thereof. Preferably the polymeric resin is a copolymer of ethylene or propylene which may contain as co-monomers one or more olefins having 2 to 12 C-atoms, in particular ethylene, propylene, isobutene, 1-butene, 1-hexene, 4-methyl-1-pentene, 1-octene, acrylic acid, methacrylic acid and vinyl acetate. In the absence of co-monomer in the polymeric resin, a wide variety of polyethylene or polypropylene may be used amongst which linear low density polyethylene (LLDPE), very low density polyethylene (VLDPE), low density polyethylene (LDPE), isotactic polypropylene, atactic polypropylene, syndiotactic polypropylene or blends thereof.

Furthermore, the polymeric resin may be a functionalized polyethylene or polypropylene or copolymers thereof or alternatively the polymeric resin may comprise a functionalized polymer. Such functionalized polymers are often referred to as functional copolymers or grafted polymers, whereby the grafting refers to the chemical modification of the polymer backbone mainly with ethylenically unsaturated monomers comprising heteroatoms whereas functional copolymers refer to the copolymerization of ethylene or propylene with ethylenically unsaturated monomers. Preferably the ethylenically unsaturated monomer comprises oxygen and/or nitrogen atoms. Most preferably the ethylenically unsaturated monomer comprises a carboxylic acid group or derivatives thereof resulting in an acylated polymer, specifically in an acetylated polyethylene or polypropylene. Preferably, the carboxylic reactants are selected from the group consisting of acrylic, methacrylic, cinnamic, crotonic, and maleic, fumaric, and itaconic reactants. Said functionalized polymers typically comprise between 1 and 10 wt% of carboxylic reactant or more. The presence of such functionalization in the resin may substantially enhance the dispersability of the resin and/or allow a reduction of further additives present for that purpose such as surfactants. Preferably the suspension is substantially free of additives that may act as solvents for the polymeric resin. Such suspension may also be referred to as solvent-free. By solvent is herein understood a liquid in which at room temperature the polymeric resin is soluble in an amount of more than 1 wt% whereas a non-solvent is understood a liquid in which at room temperature the polymeric resin is soluble in an amount of less than 0.1 wt%.

The polymeric resin has a density as measured according to ISO1183 in the range from 860 to 930 kg/m³, preferably from 870 to 920 kg/m³, more preferably from 875 to 910 kg/m³. The inventors identified that polyolefin resins with densities within said preferred ranges provide an improved balance between the mechanical properties of the lengthy body and the processability of the suspension, especially the dried suspension during the process of the invention.

The polymeric resin is a semi-crystalline polyolefin having a peak melting temperature in the range from 40 to 140°C and a heat of fusion of at least 5 J/g, measured in accordance with ASTM E793 and ASTM E794, considering the second heating curve at a heating rate of 10 K/min, on a dry sample. In a preferred embodiment of the present invention the polymeric resin has a heat of fusion of at least 10 J/g, preferably at least 15 J/g, more preferably at least 20 J/g, even more preferably at least 30 J/g and most preferably at least 50 J/g. The inventors surprisingly found that with the increase heat of fusion the lengthy body showed improved monofilament like character. The heat of fusion of the polymeric resin is not specifically limited by an upper value, other than the theoretical maximum heat of fusion for a fully crystalline polyethylene or polypropylene of about 300 J/g. The polymeric resin is a semi-crystalline product with a peak melting temperature in the specified ranges. Accordingly is a reasonable upper limit for the polymeric resin a heat of fusion of at most 200 J/g, preferably at most 150 J/g. In another preferred embodiment, a peak melting temperature of the polymeric resin is in the range from 50 to 130°C, preferably in the range from 60 to 120°C. Such preferred peak melting temperatures provide a more robust processing method to produce the lengthy body in that the conditions for drying and/or compaction of the lengthy body do need less attention while lengthy bodies with good properties are produced. The polymeric resin may have more than one peak melting temperatures. In such case at least one of said melting temperatures falls within the above ranges. A second and/or further peak melting temperature of the polymeric resin may fall within or outside the temperature ranges. Such may for example be the case when the polymeric resin is a blend of polymers.

The polymeric resin may have a modulus that may vary in wide ranges. A low modulus resin with for example a modulus of about 50 MPa, will provide very flexible lengthy bodies with good strength properties. A high modulus resin with for example a modulus of about 500 MPa may provide lengthy bodies such as monofilaments with improved structural appearance. Each application may have an optimum modulus for the resin, related to the specific demands during the use of the application.

The application of the suspension to the HPPE fibres may be done by methods known in the art and may depend amongst others on the moment the suspension is added to the fibres, the nature of the fibres, the concentration and viscosity of the suspension. The suspension may for example be applied to the fibres by spraying, dipping, brushing, transfer rolling or the like, especially depending on the intended amount of polymeric resin present in the lengthy body of the invention. The amount of suspension present in the body may vary widely in function of the intended application of the lengthy body and can be adjusted by the employed method but also the properties of the suspension. For some applications, low amounts of highly concentrated suspensions are employed to reduce the energy and time need for drying the impregnated lengthy body. For other applications a low concentration suspension may be advantageous for example to increase the wetting and impregnation speed with low viscous suspensions. Last but not least the suspension concentration and quantity should be chosen to provide a lengthy body with the required amounts of polymeric resin present as a matrix material in said body. In a preferred embodiment said concentration of polymeric resin is at most 25 wt%, preferably at most 20 wt% and even more preferably at most 18 wt% and most preferably at most 16 wt%. In another preferred embodiment the concentration of the polymeric resin is between 1 and 25 wt%, preferably between 2 and 20 wt%, most preferably between 4 and 18 wt%, whereby the weight percentage is the weight of polymeric resin per total weight of the lengthy body.

Once the polymeric aqueous suspension is applied to the HPPE fibres, the impregnated fibre, preferably the assembly comprising the impregnated fibres, is at least partially dried. Such drying step involves the removal, e.g. the evaporation of at least a fraction of the water present in the assembly. Preferably the majority, more preferably essentially all water is removed during the drying step, optionally in combination with other components. Drying, i.e. the removal of water, may be done by methods known in the art. Typically the evaporation of water involves an increase of the temperatures of the lengthy body up to or above the boiling point of water. The temperature increase may be assisted or substituted by a reduction of the pressure and or combined with a continuous refreshment of the surrounding atmosphere. Typical drying conditions are temperatures of between 40 and 130°C, preferably 50 and 120°C. Typical pressure during the drying process are between 10 and 110 kPa, preferably between 20 and 100 kPa.

The process of the invention may optionally comprise a step wherein the fibres comprising the polymeric resin is heated to a temperature in the range from the melting temperature of the polymeric resin to 153°C, before, during and/or after the partially drying of the aqueous suspension. Heating of the fibres may be carried out by keeping the fibres for a dwell time in an oven set at a heating temperature, subjecting the impregnated fibres to heat radiation or contacting the body with a heating medium such as a heating fluid, a heated gas stream or a heated surface. Preferably, the temperature is at least 2°C, preferably at least 5°C, most preferably at least 10°C above the peak melting temperature of the polymeric resin. The upper temperature is at most 153°C, preferably at most 150°C, more preferably at most 145°C and most preferably at most 140°C. The dwell time is preferably between 2 and 100 seconds, more preferably between 3 and 60 seconds, most preferably between 4 and 30 seconds. In a preferred embodiment, the heating of the fibres and/or the lengthy body of this step overlaps, more preferably is combined with the drying step of the aqueous suspension. It may prove to be practical to apply a temperature gradient to the impregnated fibres whereby the temperature is raised from about room temperature to the maximum temperature of the heating step over a period of time whereby the fibres will undergo a continuous process from drying of the suspension to at least partial melting of the polymeric resin.

In a further optional step of the process of the invention, the lengthy body is at least partially compacted and/or elongated by applying a pressure and/or a tension to the lengthy body before, during and/or after the optional step of at least partially melting the polymeric resin. Said pressure may be applied by compression means known in the art, which may amongst others be a calender, a smoothing unit of flat, oblong or circular geometry. The compression means form a gap through which the lengthy body will be processed. Pressure for compaction generally ranges from 100 kPa to 10 MPa, preferably from 110 to 500 kPa. The compression is preferably performed after at least partially drying the impregnated lengthy body, more preferably during or after the optional step of applying a temperature, while the temperature of the lengthy body is in the range from the melting temperature of the polymeric resin to 153°C. A tension may be applied by tension means known in the art, which may amongst others be roller stands, calenders, alone or combined with above mentioned compression means suitable to apply a dynamic or static tension to the lengthy body. The tension means form a longitudinal tension on the lengthy body. The tension applied to the lengthy body may vary in a wide range from 0 to the maximum break load of the lengthy body. Preferably the tension is at most 50%, more preferably 25% and most preferably at most 10% of the maximum break load of the lengthy body. The tensioning is preferably performed after at least partially drying the lengthy body, more preferably during or after the optional step of applying a temperature, while the temperature of the lengthy body is in the range from the melting temperature of the polymeric resin to 153°C. The tension applied to the lengthy body creates pressure between the fibers of the lengthy body which can advantageously be applied in conjunction with the present invention.

In a specific embodiment of the invention, a compression of the lengthy body may be achieved by passing the impregnated lengthy body during or after the impregnation step or the partial drying step over at least one sheave, whereby the sheave has preferably a U or V-shaped groove.

The invention also relates to the lengthy body produced according to the inventive process. Such lengthy body comprises assembled HPPE fibres and a polymeric resin, wherein the polymeric resin is a homopolymer or copolymer of ethylene and/or propylene, wherein the polymeric resin has a density as measured according to ISO1183 in the range from 860 to 930 kg/m³, a melting temperature in the range from 40 to 140°C and a heat of fusion of at least 5 J/g. Such lengthy body is subject to the preferred embodiments and potential advantages as discussed above or below in respect of the present inventive method, whereas the preferred embodiments for the lengthy body potentially apply vice versa for the inventive method.

By lengthy body is herein understood an elongated body, especially an elongated body comprising HPPE fibres with the length dimension of the lengthy body being much greater than the transverse dimensions of width and thickness. Accordingly, the term lengthy body includes but is not limited to strands, cables, cords, ropes, ribbons, hoses, tubes and the like. Preferably said length dimension is at least 10 times, more preferably at least 20 times even more preferably at least 50 times and most preferably at least 100 times greater than the width or thickness dimension of the lengthy body, whichever is larger. The cross-sectional shape of the lengthy body may be from round or almost round, oblong or rectangular shape whereby a lengthy body with a round or almost round cross-section may be but is not limited to strands, cables, cords ropes, hoses or tubes while lengthy bodies with oblong to rectangular cross-sections are commonly referred to as ribbons or strips.

In its simplest form the lengthy body is comprised of a thread of 2 or more fibres lying side by side without being twisted about each other. Such thread of untwisted fibres may also be called a bundle and as elaborated above may have a variety of cross-sectional shapes. The fibres in a bundle will substantially be oriented in a single direction, the length direction of the lengthy body. Furthermore, a thread may be comprised of two or more twisted fibres, generally referred to as a yarn. Several yarns may be laid in same or different directions to produce a so-called composite bundle or a strand, which again may be aggregated together or in combination with other fibre arrangements to complex fibre assemblies such as ropes or ribbons. The arrangement of the fibres one to another in the lengthy body of the invention may be of different types amongst which a parallel, laid, braided or woven fibre or yarn arrangement, or others as may be known to the person skilled in the field.

A rope in the context of the present invention is a lengthy body comprising HPPE fibres with the lengthy body having a cross-section that is about circular or round, but also an oblong cross-section, meaning that the cross-section of a tensioned rope shows a flattened, oval, or even (depending on the number of primary strands) an almost rectangular form. Such oblong cross-section preferably has an aspect ratio, i.e. the ratio of the larger to the smaller diameter (or width to thickness ratio), in the range of from 1.2 to 4.0.

The rope according to the invention can be of various constructions, including laid, braided, parallel, and wire rope-like constructed ropes. The number of strands in the rope may also vary widely, but is generally at least 3 and preferably at most 16, to arrive at a combination of good performance and ease of manufacture.

In one embodiment the rope according to the invention is of a braided construction, to provide a robust and torque-balanced rope that retains its coherency during use. There is a variety of braid types known, each generally distinguished by the method that forms the rope. Suitable constructions include soutache braids, tubular braids, and flat braids. Tubular or circular braids are the most common braids for rope applications and generally consist of two sets of strands that are intertwined, with different patterns possible. The number of strands in a tubular braid may vary widely. Especially if the number of strands is high, and/or if the strands are relatively thin, the tubular braid may have a hollow core; and the braid may collapse into an oblong shape.

The number of strands in a braided rope according to the invention is preferably at least 3. There is no upper limit to the number of strands, although in practice ropes will generally have no more than 32 strands. Particularly suitable are ropes of an 8- or 12-strand braided construction. Such ropes provide a favourable combination of tenacity and resistance to bend fatigue, and can be made economically on relatively simple machines.

The rope according to the invention can be of a construction wherein the lay length (the length of one turn of a strand in a laid construction) or the braiding period (the pitch length related to the width of a braided rope) is not specifically critical. Suitable lay lengths and braiding periods are in the range of from 4 to 20 times the diameter of the rope. A higher lay length or braiding period may result in a more loose rope having higher strength efficiency, but which is less robust and more difficult to splice. Too low a lay length or braiding period would reduce tenacity too much. Preferably therefore, the lay length or braiding period is about 5 - 15 times the diameter of the rope, more preferably 6 -10 times the diameter of the rope.

A ribbon in the context of the present invention is a lengthy body having a thickness and a width, wherein thickness is much smaller than width. Preferably the ribbon has a width to thickness ratio of at least 5:1, more preferably at least 10:1, the width to thickness ratio preferably being at most 200:1, and even more preferably at most 50:1. Sometimes a ribbon may as well be called a narrow weave, a strip, a strap, a band or a flat band. Preferably a ribbon of the invention has a width from 2 mm to 200 mm, more preferably from 4 mm to 100 mm and most preferably from 5 mm to 50 mm and a thickness form 20 micrometer to 5 mm, preferably from 30 micrometer to 4 mm and most preferably from 40 micrometer to 2 mm. In its simplest form, the ribbon may be formed by a parallel arrangement of at least 2, preferably at least 10 most preferably at least 100 fibres forming the ribbon while the array of parallel fibres are interconnected through the polymeric resin present in the lengthy body of the invention, forming a unitary ribbon. Alternatively the ribbon is an interlaced structure of fibres for example by weaving, plaiting or knitting yarns by constructions known in the art, e.g. a plain and/or twill weave construction. The ribbon preferably has an n-ply textile webbing construction where n is preferably at most 4, more preferably 3 and most preferably 2. In the case of a woven ribbon, often referred to as narrow weave, the substantially parallel (warp) yarns of the ribbon comprise the HPPE fibres of the lengthy body and are woven together with transverse threads (weft). Said threads may be same or different from said HPPE fibres.

Although the applicability of the invention is mainly described for lengthy bodies, uses of ropes and ribbons, or in general lengthy bodies, are known and are also within the scope of the invention. In particular the lengthy bodies can be used in the manufacture of a net, such as a fishing net, a roundsling, a belt, a splice or a synthetic chain link. It has been shown that the lengthy body according to the invention has a better knot strength to other lengthy bodies which makes the use of the present invention especially suitable. Accordingly is an embodiment of the present invention an article comprising the lengthy body, preferably a net, sling, a splice or a synthetic chain link.

A preferred embodiment of the present invention concerns a lengthy body containing more than 80 wt% of UHMWPE, preferably more than 90 wt% of UHMWPE and most preferably more than 95 wt% UHMWPE, whereby the wt% are expressed as mass of UHMWPE to the total mass of the lengthy body. In a yet preferred embodiment, the UHMWPE present in the lengthy body is comprised in the HPPE fibres of said lengthy body.

The application of an aqueous polymeric suspension whereby the polymeric resin present in said suspension is according to above described embodiments is providing products with improved properties. The use of an aqueous suspension of a polymeric resin as a binder material for HPPE fibres wherein the polymeric resin is a homopolymer or copolymer of ethylene and/or propylene, wherein the polymeric resin has a density as measured according to ISO1183 in the range from 860 to 930 kg/m³, a peak melting temperature in the range from 40 to 140°C and a heat of fusion of at least 5 J/g is hence a further embodiment of the present invention.

It is important that the polyolefin resin of the suspension softens or melts at higher temperatures. So far such suspensions have not yet been applied in combination with HPPE fibres. Surprisingly, they provide improved performance in various products especially products comprising oriented UHMWPE fibres.

The combination of a braided rope comprising HPPE fibre with polyolefin polymers is described in WO2011/154415 where a polyolefin polymer is coated onto a core of HMPE yarns surrounded by an outer layer of steel wire strands. However such products contain substantial amounts of polyolefin resin or provide an inadequate wetting/distribution of the polymeric resin throughout the HPPE fibres. Products such as described in WO2011/154415 are substantially different from the ones prepared according to the herein presented method, amongst others because in the currently presented methods and products the distribution of the polymeric resin is throughout the structure providing lengthy bodies with specific improvements of mechanical properties. After impregnation, the liquid is evaporated and thus the remainder of the impregnated material is present in a lower amount and/or with an increased homogeneity throughout the lengthy body. By the term throughout the lengthy body is herein understood that the polymeric resin covers at least 50% of the total surface of the HPPE fibers of the lengthy body, preferably 70 and most preferably 90% of the total surface of the HPPE fibers. The suspension and the therewith prepared lengthy body may contain at least one surface active ingredient such as ionic or non-ionic surfactant.

HPPE fibres coated with a polymer having ethylene or propylene crystallinity are described in EP0091547, whereby mono- or multifilament fibers are treated at high temperatures with solutions of the polymer in hydrocarbon solvents at a concentration of up to 12 g/L. However, through such hot solvent treatment, the fibers may contain residual amounts of the employed hydrocarbon solvent negatively affecting fiber properties. Furthermore the treatment of the HPPE fiber at high temperature with a hydrocarbon solvent may affect structural properties of the fibers, especially through diffusion of the hydrocarbon solvent and/or polymer into the HPPE filaments. The fiber-polymer interface may be modified by partial etching and dissolution of the HPPE which may affected amongst others the interface as well as the bulk properties of the HPPE fibers. In contrast the present process may be performed at room temperature and employs a non-solvent for the HPPE, i.e. water. Accordingly the fibers and lengthy bodies produced by the process of the present invention may have a better retention of the structural properties of the HPPE fibers. The fibers may also present a different surface structure amongst which a better discerned HPPE-coating interfaces compared to the fibers treated at high temperature with a hydrocarbon solvent since no hydrocarbon solvent and/or polymer may diffuse into the HPPE fiber. Furthermore the process and products described in EP0091547 are limited by the amount of polymer present in the hydrocarbon solutions and hence applied to the HPPE fibers. The solutions are limited by their increasing viscosities and high amounts of polymer coating may only be applied by repetition of the coating operation.

A preferred field of application of the lengthy body of the invention is in the field of ropes and ribbons with increased knot slippage forces and tenacities of the lengthy body. It was surprisingly found that by the addition of non-loadbearing polymer resin to a rope construction the overall tenacity of the rope could be attained. Addition of the same amount of non-loadbearing polymeric resin as an overmolded layer or as individual fibres or yarns would result in a reduction of the tenacity.

The invention will be further explained by the following examples and comparative experiment, however first the methods used in determining the various parameters useful in defining the present invention are hereinafter presented.

### METHODS

- Dtex: yarn's or filament's titer was measured by weighing 100 meters of yarn or filament, respectively. The dtex of the yarn or filament was calculated by dividing the weight (expressed in milligrams) to 10;
- Heat of fusion and peak melting temperature have been measured according to standard DSC methods ASTM E 794 and ASTM E 793 respectively at a heating rate of 10K/min for the second heating curve and performed under nitrogen on a dehydrated sample.
- The density of the polymeric resin is measured according to ISO 1183.
- IV: the Intrinsic Viscosity is determined according to method ASTM D1601(2004) at 135°C in decalin, the dissolution time being 16 hours, with BHT (Butylated Hydroxy Toluene) as anti-oxidant in an amount of 2 g/l solution, by extrapolating the viscosity as measured at different concentrations to zero concentration.
- Tensile properties of HPPE fibers: tensile strength (or strength) and tensile modulus (or modulus) are defined and determined on multifilament yarns as specified in ASTM D885M, using a nominal gauge length of the fibre of 500 mm, a crosshead speed of 50 %/min and Instron 2714 clamps, of type "Fibre Grip D5618C". On the basis of the measured stress-strain curve the modulus is determined as the gradient between 0.3 and 1 % strain. For calculation of the modulus and strength, the tensile forces measured are divided by the titre, as determined above; values in GPa are calculated assuming a density of 0.97 g/cm³ for the HPPE.
- Tensile properties of fibers having a tape-like shape: tensile strength, tensile modulus and elongation at break are defined and determined at 25°C on tapes of a width of 2 mm as specified in ASTM D882, using a nominal gauge length of the tape of 440 mm, a crosshead speed of 50 mm/min.
- Tensile strength and tensile modulus at break of the polyolefin resin were measured according ISO 527-2.
- Number of olefinic branches per thousand carbon atoms was determined by FTIR on a 2 mm thick compression moulded film by quantifying the absorption at 1375 cm-1 using a calibration curve based on NMR measurements as in e.g. EP 0 269 151 (in particular pg. 4 thereof).

### MATERIALS

Suspension 1 was purchased from Dow Chemical company under the trade name HYPOD1000 and is a 56 wt% polyolefin aqueous suspension with melting peaks at 51°C and 139°C and a heat of fusion of 28 J/g.

Suspension 2 was purchased from Michelman under the trade name of Michem^{®} Prime 5931 and is a 28 wt% suspension of an acrylate modified polyolefin with a melting peak at 78°C and a heat of fusion of 29 J/g in water.

Suspension 3 was produced by extruding a mixture a plastomer (Queo 0210, commercially available from Borealis, with a density of 0.902 g/cm³, a peak melting point of 95°C and a heat of fusion of 120 J/g) and a surfactant (Synperonic^{®} F 108 purchased from SIGMA-ALDRICH) in a weight ratio of 7 to 3 at 100°C under addition of water. The resin content in the suspension was determined to be 40 wt%.

### Example 1 and Comparative Experiment A:

3 HPPE yarns (Dyneema^{®} 1760 SK76, tenacity 35.5 cN/dtex, modulus1245 cN/dtex) have been bundled and impregnated by dipping in a polyolefin suspension prepared by diluting suspension 1 with a tenfold amount of water. The wetted yarns were twisted with 160 turns per meter and fed through an oven with a length of 8.4 meters with an inlet speed of 5 m/s and an outlet speed of 6 m/s. The oven temperature was set at 153.6°C. The obtained dried monofilament-like product (Example 1) contained 3.5 wt% polyolefin resin and 96.5 wt% was fibrous material. For the comparative Experiment A, Example 1 was repeated without applying the suspension.

Table 1 reports the test results of Example 1 and Comparative experiment A. It is surprising that the sample of Example 1 has a tenacity of about 5 % and modulus about 10% higher than the strengths of the reference sample, especially since the sample of Example 1 only comprises 96.5 wt% of loadbearing HPPE fibres

**Table 1**

| Sample | Titer | Force at break | Tenacity | Young's Modulus | Fracture strain | Fusion quality |
|---|---|---|---|---|---|---|
| | [dtex] | [N] | [cN/dtex] | [cN/dtex] | [%] | |
| Example 1 | 4911 | 1048.9 | 21.4 | 592.9 | 3.61 | excellent |
| Comp. Ex. A | 4743 | 975.2 | 20.6 | 543.1 | 3.54 | good |

### Comparative Example B

A rope having a diameter of 5 mm was produced from HPPE fibers (DSM Dyneema SK 78, 1760dtex). The construction of the strands was 4 x 1760 dtex, 20 turns per meter S/Z. From the strands a rope was produced. The rope construction was a 12x1 strand braided rope with a 27 mm pitch. The average breaking strength of the rope was 18750 N.

The bend fatigue of the rope was tested. In this test the rope was bent over three free rolling sheaves each having a diameter of 50 mm. The three sheaves were arranged in a V-formation and the rope was placed over the sheaves in such a way that the rope has a bending zone at each of the sheaves. The rope was placed under load and cycled over the sheaves until the rope reached failure. In one machine cycle the sheaves were rotated in one direction and then in the opposite direction, thus passing the rope six times over a sheave in one machine cycle The stroke of this bending was 45 cm. The cycling period was 5 seconds per machine cycle. The force applied to the rope was 30% of the average breaking strength of the rope. Ropes according to comparative Example B failed on average [3] after 319 machine cycles.

### Comparative Experiment C:

Comparative Experiment B was repeated with the difference that the SK78, 1760 yarn had been coated by a coating process and a coating composition according to Example 1 of WO2011/015485, involving the dipping and drying in a 2 component coating followed by curing at 120°C. Ropes comprising the cross-linked silicone rubber coated yarn were subjected to the bending test of comparative B and failed on average [4] after 2048 cycles.

### Examples 2 to 4

Comparative Experiment B was repeated with the difference that ropes have been constructed from 3 different yarns. For Example 2, the SK78, 1760 yarn was coated by dipping the yarn in suspension 3, followed by drying the yarn under tension in an oven at 60°C for about 5 minutes. The obtained yarn had a polymeric resin content of about 10 wt%. For Examples 3 and 4 the suspension 3 was diluted with water in a 1:1 and a 1:3 ratio (suspension : water) respectively resulting after drying in coated yarns with a polymeric resin content of about 6 and 3 wt% respectively. All three yarns showed a surprising ease of handling, without fraying, stickiness or greasy appearance.

The ropes were subjected to the bending fatigue test described above and failed on average after [3] 1246, [4] 2286 and [4] 748 cycles for ropes 2, 3 and 4 respectively. Number between brackets express the number of tests performed with each type of rope.

The ropes according to examples 2 to 4 showed a remarkable stiffness and robust handling compared to ropes without a coating (Comp. Ex. B) or with a cross-linked silicone coating (Comp. Ex . C). The described performance in the continuous bending test came as a surprise to the inventors since such combination of bending fatigue properties and stiffness was not experienced before.

### Example 5 and 6 and Comparative Experiments D, E and F:

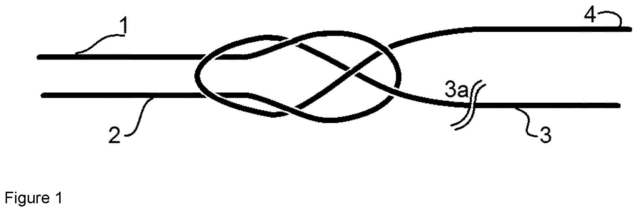

16 ends of commercial yarn (Dyneema^{®} 1760 SK78, tenacity 35.1 cN/dtex, modulus1160 cN/dtex) have been braided to form a rope with a pitch length of about 2.5. Five knots have been prepared, each knot comprising 2 lengths of said rope knotted together according to Figure 1. A first knot was wetted with suspension 1, and subsequently dried under ambient conditions (Example 5). A second knot was wetted with suspension 2, and subsequently dried under ambient conditions (Example 6). A third knot was wetted with suspension 4, and subsequently dried (Com. Ex. D). A fourth knot was left untreated (Comp. Ex. E).

A fifth knot (Comp. Ex. F) was prepared from a rope comparable to the one of Example 5 with the difference that the SK78-1760 yarn to prepare the rope was the cross-linked silicone coated yarn of Comparative Experiment C.

All knots were then tightened with 500 N, by pulling both ends of the first rope length (1) and (2) in the opposite direction to the two ends of the second rope length (3) and (4). After completion of the knot, one end (3) of the second rope length was cut at location (3a) in Figure 2. Testing was performed by pulling the two ends (1) and (2) against the remaining end (4). The force at which the knot collapses due to slip is recorded as knot slippage force.
The results of the knot slippage force tests are presented below.

| Knot | | Knot slippage force [N] |
|---|---|---|
| Example 5 | Suspension 1 | 1976 |
| Example 6 | Suspension 2 | 1836 |
| Comp. Ex. D | Suspension 4 | 635 |
| Comp. Ex. E | - | 279 |
| Comp. Ex. F | Silicone coating | 187 |

## Claims

1. A method for manufacturing a lengthy body comprising high performance polyethylene fibres and a polymeric resin throughout the lengthy body comprising the steps of
a) providing high performance polyethylene (HPPE) fibres
b) applying an aqueous suspension of the polymeric resin to the HPPE fibres before, during or after;
c) assembling the HPPE fibres to form a lengthy body
d) at least partially drying the aqueous suspension of the polymeric resin applied in step b);
to obtain a lengthy body comprising the high performance polyethylene fibres and the polymeric resin throughout the lengthy body upon completion of steps a), b), c) and d);
e) optionally applying a temperature in the range from the melting temperature of the resin to 153°C to the lengthy body of step c) before, during and/or after step d) to at least partially melt the polymeric resin; and
f) optionally applying a pressure and/or a tension to the lengthy body obtained in step d) before, during and/or after step e) to at least partially compact and/or elongate the lengthy body,
wherein the polymeric resin is a homopolymer or copolymer of ethylene and/or propylene and wherein said polymeric resin has a density as measured according to ISO1183 in the range from 860 to 930 kg/m³, a peak melting temperature in the range from 40 to 140°C and a heat of fusion of at least 5 J/g.

2. The method according to claim 1 wherein the HPPE fibres are continuous filaments or staple fibres.

3. The method of claim 1 or 2 wherein the HPPE fibres are prepared by a melt spinning process, a gel spinning process or solid state powder compaction process.

4. The method according to any of the claims 1 to 3 wherein the concentration of polymeric resin in the aqueous suspension is between 4 and 60 wt%, preferably between 5 and 50 wt%, most preferably between 6 and 40 wt%, whereby the weight percentage is the weight of polymeric resin in the total weight of aqueous suspension.

5. The method according to any of the claims 1 to 4 wherein the HPPE fibres have a tenacity of at least 1.0 N/tex, preferably 1.5 N/tex, more preferably at least 1.8 N/tex.

6. The method according to any of the claims 1 to 5 wherein the HPPE fibres comprise ultra high molecular weight polyethylene (UHMWPE), preferably the HPPE fibres substantially consist of UHMWPE.

7. The method according to any of the preceding claims wherein the amount of polymeric resin in the lengthy body is between 1 and 25 wt%, preferably between 2 and 20 wt%, most preferably between 4 and 18 wt%, whereby the weight percentage is the weight of polymeric resin in the total weight of the lengthy body.

8. The method according to any of the preceding claims wherein the density of the polymeric resin is in the range from 870 to 920 kg/m³ preferably from 875 to 910 kg/m³.

9. The method according to any of the preceding claims wherein the peak melting temperature is in the range from 50 to 130°C, preferably in the range from 60 to 120°C.

10. The method according to any of the preceding claims wherein the heat of fusion is at least 10 J/g, preferably at least 15 J/g, more preferably at least 20 J/g, even more preferably at least 30 J/g and most preferably at least 50 J/g.

11. A lengthy body obtainable by any of the preceding claims comprising HPPE fibres and a polymeric resin throughout the lengthy body , wherein the polymeric resin is a homopolymer or copolymer of ethylene and/or propylene, wherein the polymeric resin has a density as measured according to ISO1183 in the range from 860 to 930 kg/m³, a melting temperature in the range from 40 to 140°C and a heat of fusion of at least 5 J/g.

12. The lengthy body according to claim 11 wherein the lengthy body is a rope or a ribbon.

13. The lengthy body according to claims 11 or 12 containing at least 80 wt% of UHMWPE, whereby the weight percentage is the weight of UHMWPE in the total weight of the lengthy body.

14. An article comprising the lengthy body according to claim 11 to 13 wherein the article is a net, a round sling, a splice, a belt or a synthetic chain link.

15. Use of an aqueous suspension of a polymeric resin as a binder material for HPPE fibres wherein the polymeric resin is a homopolymer or copolymer of ethylene and/or propylene, wherein the polymeric resin has a density as measured according to ISO1183 in the range from 860 to 930 kg/m³, a peak melting temperature in the range from 40 to 140°C and a heat of fusion of at least 5 J/g.
